# EUROPÄISCHE PATENTSCHRIFT

(11) **EP 2 394 765 B1**
(45) Veröffentlichungstag und Bekanntmachung des Hinweises auf die Patenterteilung: **15.01.2014**
(21) Anmeldenummer: 10165864.9
(22) Anmeldetag: 14.06.2010
(51) Int. Cl.: B23B 45/16, B25D 11/10, B23Q 5/04

(54) **Schlagbohrmaschine**
Percusion drill
Perceuse à percussion

(43) Veröffentlichungstag der Anmeldung: 14.12.2011
(73) Patentinhaber: Wittwer, Anton, 3537 Eggiwil (CH)
(72) Erfinder: Wittwer, Anton, 3537 Eggiwil (CH)
(74) Vertreter: BOVARD AG

(56) Entgegenhaltungen:
- WO-A1-95/21039
- GB-A- 1 376 506
- JP-A- 2004 216 511
- US-A- 3 789 933

## Beschreibung

Die hier vorliegende Erfindung bezieht sich auf eine Schlagbohrmaschine, umfassend eine mit einem Antriebsmotor ausgestattete Antriebseinrichtung mit einer rotierend antreibbaren ersten Achse, eine ein Gehäuse aufweisende Einheit, die auf die Antriebseinrichtung aufsetzbar ist, mit einer weiteren Achse, welche mit einer Aufnahme für einen Bohrer ausgestattet ist und auf welche die Rotationsbewegung der ersten Achse und die durch eine Schlageinrichtung erzeugte schlagende Achsialbewegung übertragbar ist, welche Schlageinrichtung in der Einheit angeordnet ist und die Rotationsbewegung der ersten Achse über ein Getriebe auf die weitere Achse übertragbar ist, und welche Schlageinrichtung aus einem ersten scheibenförmigen Rad, welches im Gehäuse ortsfest gehalten ist, und einem zweiten scheibenförmigen Rad, welches auf der weiteren Achse fixiert ist, gebildet ist, und dass die gegeneinander gerichteten Stirnflächen der beiden scheibenförmigen Räder jeweils mit einer im wesentlichen in radialer Richtung verlaufenden Verzahnung ausgestattet sind, wobei die erste Achse und die weitere Achse im auf die Antriebseinrichtung aufgesetzten Zustand der Einheit im wesentlichen rechtwinklig zueinander ausgerichtet sind.

Schlagbohrmaschinen sind in vielfältiger Weise bekannt. Sie dienen dazu, in Mauer- oder Betonwerk Bohrungen anzubringen, wobei diese Schlagbohrmaschinen handbetätigte Maschinen sind. Die üblichen Schlagbohrmaschinen weisen in achsialer Richtung des Bohrers und demzufolge der anzubringenden Bohrung eine grosse Länge auf, weshalb es erforderlich ist, dass in achsialer Richtung der anzubringenden Bohrung ein relativ grosser Freiraum vorhanden ist. Bei Nichtvorhandensein eines derartigen Freiraums wird es schwierig, wenn nicht sogar unmöglich, mit einer derartigen Schlagbohrmaschine die entsprechende Bohrung anbringen zu können.

Es sind auch Schlagbohrmaschinen bekannt, welche mit einem Aufsatz versehen sind, in welcher der Bohrer bzgl. der Längsausrichtung in abgewinkelter Position, vorzugsweise rechtwinklig eingesetzt werden kann. Eine derartige Einrichtung ist beispielsweise aus der DE A-3439475 bekannt. Bei dieser Schlagbohrmaschine wird ein winkliger Vorsatz aufgesetzt, mit welchem neben dem rotativen Antreiben des Bohrers auch die schlagende achsiale Bewegung auf den Bohrer umgelenkt wird. Bei dieser Anordnung kann nicht die volle Schlagwirkung auf den Bohrer übertragen werden. Durch die Elastizität der Schlagübertragungsmittel geht einiges an Schlagenergie verloren. Zudem ist die Herstellung einer derartigen Ausgestaltung einer Schlagbohrmaschine relativ aufwändig und entsprechend mit hohen Kosten verbunden.

In der japanischen Patentveröffentlichung JP 2004 216 511 A ist eine Schlagbohrmaschine gemäss dem Oberbegriff des unabhängigen Patentanspruchs 1 beschrieben.

Die Aufgabe der vorliegenden Erfindung besteht somit darin, eine Schlagbohrmaschine mit abgewinkeltem Bohrer so zu gestalten, dass eine möglichst optimale Schlagwirkung erreicht wird und die Herstellung und die Montage in einfacher Weise und kostengünstig erreicht werden kann.

Erfindungsgemäss erfolgt die Lösung dieser Aufgabe dadurch, dass das Gehäuse der Einheit aus zwei Hälften gebildet ist, welche miteinander lösbar verbunden sind, und dass die Achsialbewegung der weiteren Achse vom ersten scheibenförmigen Rad weg durch einen Anschlag begrenzt ist, welcher Anschlag durch eine am Gehäuse angeordnete Schulter gebildet ist, auf welcher die der mit einer Verzahnung versehenen Stirnfläche gegenüberliegende Stirnfläche des zweiten scheibenförmigen Rades abstützbar ist.

Mit dieser erfindungsgemässen Ausgestaltung wird erreicht, dass die durch die Schlagrichtung erzeugte schlagende Bewegung direkt und ohne Umlenkung auf den Bohrer übertragen werden kann, wodurch der Energieverlust auf ein absolutes Minimum beschränkt werden kann und die Effizienz der Schlagbohrmaschine optimal gehalten werden kann. Zudem kann durch diese Ausgestaltung der Erfindung die Bauhöhe in achsialer Richtung zum Bohrer sehr gering gehalten werden. Dadurch lässt sich der Einsatzbereich auch bei engen Platzverhältnissen vergrössern.

Zudem weist die Einheit ein Gehäuse auf, welches aus zwei Hälften gebildet ist, welche miteinander lösbar verbunden sind, wodurch sich insbesondere eine einfache Montage dieser Einheit erreichen lässt.

Dadurch kann die Achsialbewegung der weiteren Achse vom ersten scheibenförmigen Rad weg durch einen Anschlag begrenzt werden, welcher durch eine am Gehäuse angeordnete Schulter gebildet ist, auf welcher die der mit einer Verzahnung versehenen Stirnfläche gegenüberliegenden Stirnfläche des zweiten scheibenförmigen Rades abstützbar ist.

Dies ergibt einen einfachen und stabilen Aufbau des Gehäuses, die Einheit kann in einfacher Weise montiert werden.

Die Einheit ist in vorteilhafter Weise mittels Verschraubung mit der Antriebseinrichtung verbunden, was mit geringem Aufwand erreicht werden kann.

In vorteilhafter Weise besteht das Getriebe aus einem ersten Kegelzahnrad, das mit der ersten Achse verbunden ist, und aus einem zweiten Kegelzahnrad, das auf der weiteren Achse drehfest angeordnet ist, welche beiden Kegelzahnräder miteinander kämmend in Eingriff sind, was einen sehr einfachen Aufbau ergibt.

Das zweite Kegelzahnrad ist ortsfest und rotierbar im Gehäuse gehalten. Die weitere Achse ist drehfest und achsial verschiebbar im zweiten Kegelzahnrad angeordnet, wodurch eine optimale Übertragung der Rotation erhalten wird.

In vorteilhafter Weise ist das zweite Kegelzahnrad mit einer achsialen Bohrung versehen, deren Oberfläche mit achsial verlaufenden Rippen und Rillen versehen sind, und ist die Oberfläche der weiteren Achse mit entsprechenden, achsial verlaufenden Rillen und Rippen ausgestattet, was die gewünschten Eigenschaften in optimaler Weise erfüllt.

In vorteilhafter Weise ist die weitere Achse durch ein oberes Radiallager und ein unteres Radiallager im Gehäuse gehalten, was eine stabile Lagerung der weiteren Achse im Gehäuse ergibt.

Eine Ausführungsform der Erfindung wird nachfolgend anhand der beiliegenden Zeichnung beispielshaft näher erläutert.

Es zeigt:
Fig. 1 in räumlicher Darstellung eine erfindungsgemässe Schlagbohrmaschine, bei welcher die eine Hälfte des Gehäuses weggelassen ist;
Fig. 2 eine Schnittdarstellung durch die Schlagbohrmaschine entlang Linie II-II gemäss Fig. 3;
Fig. 3 eine Schnittdarstellung durch die Bohrmaschine entlang Linie III-III gemäss Fig. 2; und

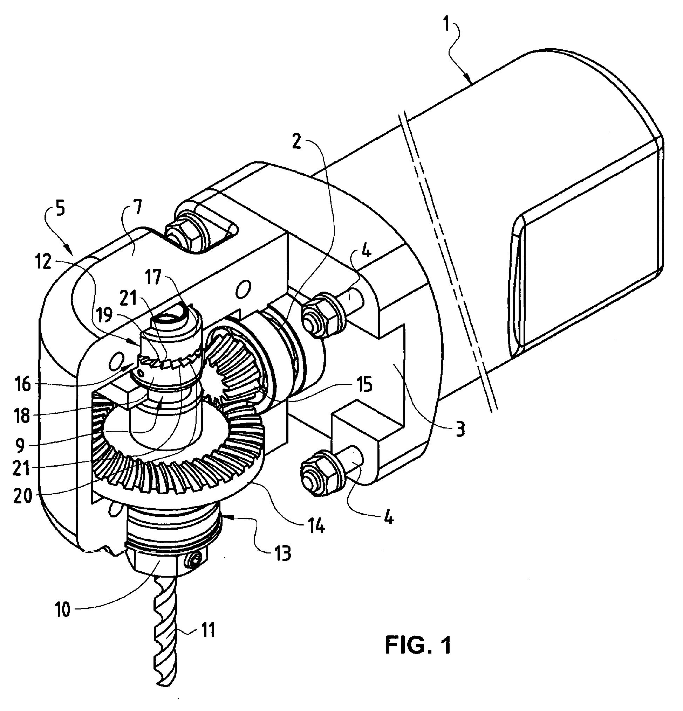

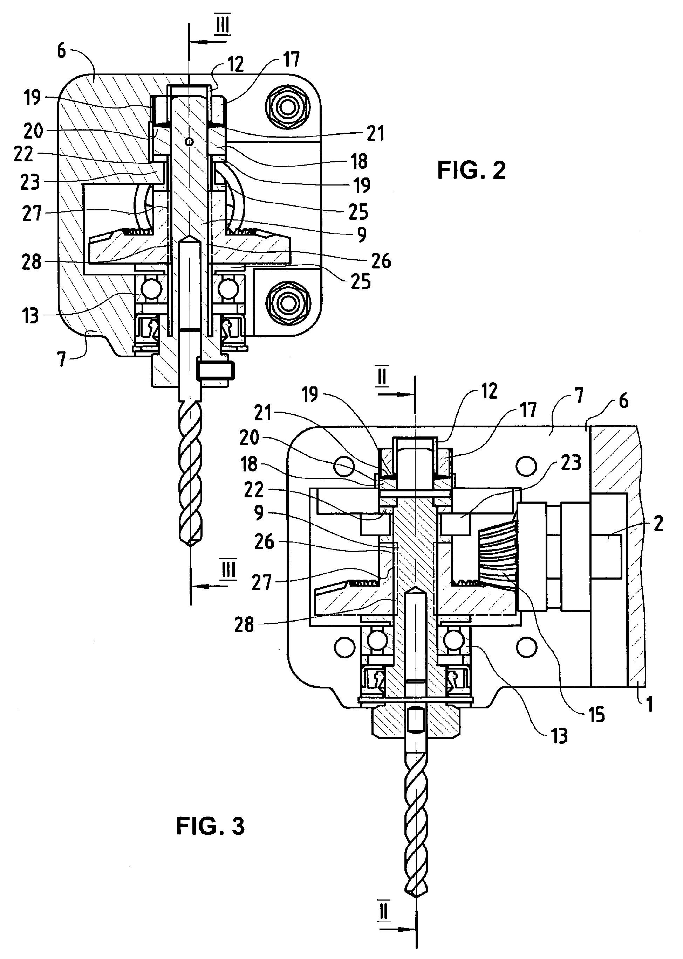

Fig. 3 eine Explosionsdarstellung der Einrichtung gemäss Fig. 1.

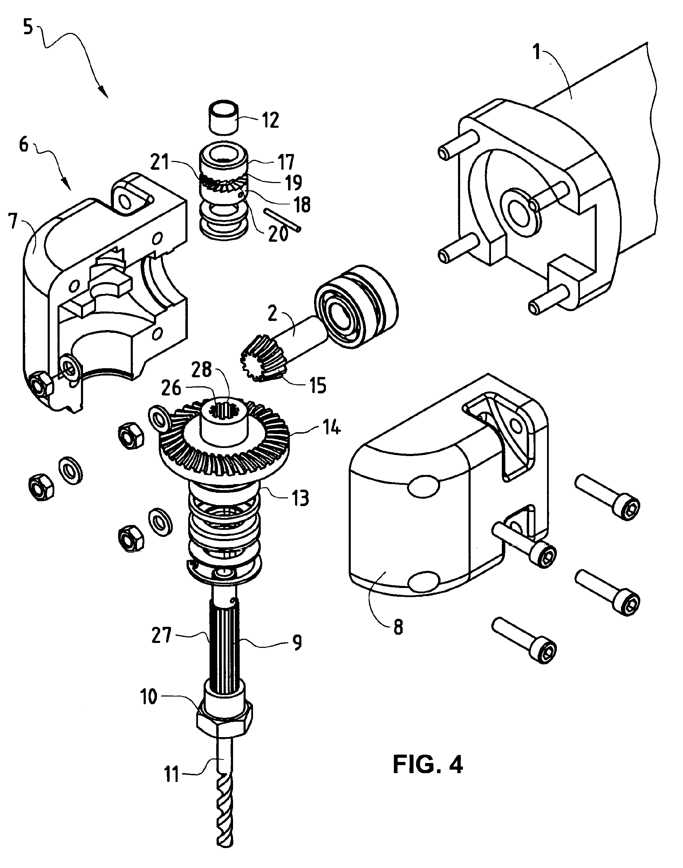

Wie aus Fig. 1 ersichtlich ist, besteht die erfindungsgemässe Schlagbohrmaschine in bekannter Weise aus einer Antriebseinrichtung 1, in welche ein Antriebsmotor in Form eines Elektromotors eingesetzt ist, der nicht dargestellt ist, und mit welchem eine erste Achse 2 in bekannter Weise rotierend angetrieben werden kann. Diese Antriebseinrichtung 1 weist eine Stirnfläche 3 auf, aus welcher die erste Achse 2 herausragt, an welcher Stirnfläche 3 Schrauben 4 angebracht sind. Auf die Stirnfläche 3 dieser Antriebseinrichtung ist eine Einheit 5 aufschraubbar, die ein Gehäuse 6 aufweist, das aus zwei Hälften 7 und 8 (Fig. 4) gebildet ist. Beim hier dargestellten Ausführungsbeispiel ist die eine Hälfte 8 des Gehäuses 6 aus Sichtbarkeitsgründen weggelassen.

Zwischen den beiden Hälften 7 und 8 des Gehäuses 6 ist eine weitere Achse 9 eingesetzt, und wird durch Lagerungen, die später noch im Detail beschrieben sind, im Gehäuse 6 drehbar gelagert. Diese weitere Achse 9 ist so angeordnet, dass sie rechtwinklig zur ersten Achse 2 ausgerichtet ist. Der über das Gehäuse 6 vorstehende Bereich der weiteren Achse 9 ist in bekannter Weise mit einer Aufnahme 10 für einen Bohrer 11 ausgestattet. Die Lagerung dieser weiteren Achse 9 im Gehäuse 6 erfolgt über ein oberes Radiallager 12 und ein unteres Radiallager 13, wie später noch im Detail gesehen wird. Zwischen den beiden Radiallagern 12 und 13 ist auf der weiteren Achse 9 ein zweites Kegelzahnrad 14 angebracht, welches mit einem ersten Kegelzahnrad kämmt, das an der ersten Achse 2 befestigt ist.

Die Schlageinrichtung 16, mit welcher die schlagende Achsialbewegung der weiteren Achse 9 erzeugt wird, besteht aus einem ersten scheibenförmigen Rad 17, welches im Gehäuse 6 ortsfest gehalten ist, und einem zweiten scheibenförmigen Rad 18, welches auf der weiteren Achse 9 fixiert ist. Die beiden scheibenförmigen Räder 17 und 18 weisen gegeneinander gerichtete Stirnflächen 19 und 20 auf, die in bekannter Weise jeweils mit einer im Wesentlichen in radialer Richtung verlaufenden Verzahnung 21 ausgestattet sind.

Aus den Fig. 2 und 3 ist die weitere Achse 9 ersichtlich, die durch das obere Radiallager 12 und das untere Radiallager 13 im Gehäuse 6 gehalten ist. Das erste scheibenförmige Rad 17 der Schlageinrichtung 16 ist im Gehäuse 6 fest verankert. Das zweite scheibenförmige Rad 18 ist fest mit der weiteren Achse 9 verbunden. Die weitere Achse 9 ist achsial verschiebbar im oberen Radiallager 12 und im unteren Radiallager 13 gehalten. Die Hubendlagen dieser Achsialbewegung der weiteren Achse 9 wird einerseits durch das Aufeinanderliegen der beiden Stirnflächen 19 und 20 des ersten scheibenförmigen Rades 17 und des zweiten scheibenförmigen Rades 18 und andererseits durch ein Anschlag 22 gebildet, der die Form einer Schulter 23 aufweist, die am Gehäuse 6 angeformt ist, und auf welcher die der Stirnfläche 20 gegenüberliegende Stirnfläche 24 des zweiten scheibenförmigen Rades 18 abgestützt wird. Die voll ausgefahrene Position des Bohrers 11 und demzufolge der weiteren Achse 9 ist in Fig. 2 dargestellt, die voll zurückgezogene Lage des Bohrers 11 und damit der weiteren Achse 9 ist in Fig. 3 ersichtlich.

Das zweite Kegelzahnrad 14 ist zwischen zwei ortsfest im Gehäuse gehaltenen Gleitringen 25 in achsialer Richtung unverschiebbar gehalten. Dieses zweite Kegelzahnrad 14 ist mit einer achsialen Bohrung 26 ausgestattet, deren Oberfläche mit achsial verlaufenden Rippen und Rillen 27 versehen sind. Die Oberfläche der weiteren Achse 9 ist in diesem Bereich ebenfalls mit achsial verlaufenden Rillen und Rippen 28 ausgestattet. Durch den Eingriff der Rippen und Rillen 27 der achsialen Bohrung in den Rillen und Rippen 28 der weiteren Achse 9 ist eine achsiale Verschiebung der weiteren Achse 9 bezüglich des zweiten Kegelzahnrades 14 möglich, das zweite Zahnrad 14 ist aber auf der weiteren Achse 9 dadurch drehfest gehalten.

Mit der hier dargestellten erfindungsgemässen Ausgestaltung wird erreicht, dass die Rotationsbewegung der Antriebseinrichtung auf die weitere Achse 9 übertragen wird, die Schlagwirkung wird durch die Schlageinrichtung 16 in der Einheit 5 direkt erzeugt und wirkt somit direkt auf die weitere Achse 9, was deren Effizienz optimal ausnützt.

Aus der Fig. 4 sind die Einzelteile dieser Schlagbohrmaschine ersichtlich, mit der Antriebseinrichtung 1, in welcher die erste Achse 2 angeordnet ist, und mit welcher das erste Kegelzahnrad 15 in Rotation versetzbar ist. Diese Rotation des ersten Kegelzahnrades wird über das zweite Kegelzahnrad 14 auf die weitere Achse 9 übertragen. Diese Achse 9 ist, wie vorgängig beschrieben worden ist, über das obere Radiallager 12 und das untere Radiallager 13 im Gehäuse 6 gelagert. Das Gehäuse 6 besteht aus einer ersten Hälfte 7 und einer zweiten Hälfte 8, die miteinander verschraubt sind, und welche auf die Antriebseinrichtung 1 ebenfalls aufgeschraubt werden kann.

Die Achsialbewegung der weiteren Achse 9 zur Erzeugung der Schlagwirkung entsteht in der Schlageinrichtung 16, gebildet durch das erste scheibenförmige Rad 17 und das zweite scheibenförmige Rad 18, die jeweils Stirnflächen 19 und 20 mit einer Verzahnung 21 aufweisen, wie dies vorgängig schon beschrieben worden ist. Die weitere Achse 9, an welcher die Aufnahme 10 für den Bohrer 11 angeordnet ist, weist eine Oberfläche auf, die mit Rippen und Rillen 27 versehen ist. Das zweite Kegelzahnrad 14 weist eine achsiale Bohrung 26 auf, die ebenfalls mit Rillen und Rippen 28 ausgestattet ist, so dass eine Längsverschiebung der weiteren Achse 9 bezüglich dieses zweiten Kegelzahnrades 14 erfolgen kann, und das zweite Kegelzahnrad 14 trotzdem drehfest mit der weiteren Achse 9 zur Übertragung der Rotation verbunden ist. Wie insbesondere aus dieser Fig. 4 ersichtlich ist, kann die Einheit 5 durch die Verwendung von zwei Hälften 7 und 8, die das Gehäuse 6 bilden, in sehr einfacher Weise und somit kostengünstig montiert werden.

Mit dieser erfindungsgemässen Ausgestaltung wird eine sehr handliche Schlagbohrmaschine erhalten, mit welcher es möglich ist, Bohrungen in Mauer- und Betonwerken anzubringen, deren Zugänglichkeit beeinträchtigt ist. Durch die sehr kompakte Bauweise wird im Bereich der anzubringenden Bohrung ein sehr geringer Freiraum benötigt, was die Einsatzmöglichkeiten dieser Schlagbohrmaschine massiv verbessert. Diese Schlagbohrmaschine zeichnet sich zudem durch eine effektive Schlagbohrleistung aus, da die Schlagwirkung direkt auf der Achse erzeugt wird, in welcher der Bohrer gehalten ist. Diese Schlagbohrmaschine zeichnet sich zudem dadurch aus, dass sie einfach aufgebaut ist und sich dadurch in einfacher Weise montieren lässt, was sich in geringen Kosten niederschlägt.

## Patentansprüche

1. Schlagbohrmaschine, umfassend eine mit einem Antriebsmotor ausgestattete Antriebseinrichtung (1) mit einer rotierend antreibbaren ersten Achse (2), eine ein Gehäuse (6) aufweisende Einheit (5), die auf die Antriebseinrichtung (1) aufsetzbar ist, mit einer weiteren Achse (9), welche mit einer Aufnahme (10) für einen Bohrer (11) ausgestattet ist und auf welche die Rotationsbewegung der ersten Achse (2) und die durch eine Schlageinrichtung (16) erzeugte schlagende Achsialbewegung übertragbar ist, welche Schlageinrichtung (16) in der Einheit (5) angeordnet ist und die Rotationsbewegung der ersten Achse (2) über ein Getriebe (14, 15) auf die weitere Achse (9) übertragbar ist, und welche Schlageinrichtung (16) aus einem ersten scheibenförmigen Rad (17), welches im Gehäuse (6) ortsfest gehalten ist, und einem zweiten scheibenförmigen Rad (18), welches auf der weiteren Achse (9) fixiert ist, gebildet ist, und dass die gegeneinander gerichteten Stirnflächen (19, 20) der beiden scheibenförmigen Räder (17, 18) jeweils mit einer im wesentlichen in radialer Richtung verlaufenden Verzahnung (21) ausgestattet sind, wobei die erste Achse (2) und die weitere Achse (9) im auf die Antriebseinrichtung (1) aufgesetzten Zustand der Einheit (5) im wesentlichen rechtwinklig zueinander ausgerichtet sind, **dadurch gekennzeichnet, dass** das Gehäuse (6) der Einheit (5) aus zwei Hälften (7, 8) gebildet ist, welche miteinander lösbar verbunden sind, und dass die Achsialbewegung der weiteren Achse (9) vom ersten scheibenförmigen Rad (17) weg durch einen Anschlag (22) begrenzt ist, welcher Anschlag (22) durch eine am Gehäuse (6) angeordnete Schulter (23) gebildet ist, auf welcher die der mit einer Verzahnung (21) versehenen Stirnfläche (20) gegenüberliegende Stirnfläche (24) des zweiten scheibenförmigen Rades (18) abstützbar ist.

2. Schlagbohrmaschine nach Anspruch 1, **dadurch gekennzeichnet, dass** die Einheit (5) mittels Verschraubung (4) mit der Antriebseinrichtung (1) verbindbar ist.

3. Schlagbohrmaschine nach Anspruch 1 oder 2, **dadurch gekennzeichnet, dass** das Getriebe aus einem ersten Kegelzahnrad (15), das mit der ersten Achse (2) fest verbunden ist, und aus einem zweiten Kegelzahnrad (14), das auf der weiteren Achse (9) drehfest angeordnet ist, besteht, welche beiden Kegelzahnräder (14, 15) miteinander kämmend im Eingriff sind.

4. Schlagbohrmaschine nach Anspruch 3, **dadurch gekennzeichnet, dass** das zweite Kegelzahnrad (14) ortsfest und rotierbar im Gehäuse (6) gehalten ist und dass die weitere Achse (9) drehfest und achsial verschiebbar im zweiten Kegelzahnrad (14) angeordnet ist.

5. Schlagbohrmaschine nach Anspruch 3 oder 4, **dadurch gekennzeichnet, dass** das zweite Kegelzahnrad (14) mit einer achsialen Bohrung (26) versehen ist, deren Oberfläche mit achsial verlaufenden Rippen und Rillen (27) versehen sind, und dass die Oberfläche der weiteren Achse (9) mit entsprechenden, achsial verlaufenden Rillen und Rippen (28) ausgestattet ist.

6. Schlagbohrmaschine nach einem der Ansprüche 1 bis 5, **dadurch gekennzeichnet, dass** die weitere Achse (9) durch ein oberes Radiallager (12) und ein unteres Radiallager (13) im Gehäuse (6) gehalten ist.

## Claims

1. Percussion drill, comprising a drive device (1), equipped with a drive motor, with a first shaft (2) able to be driven rotatably, a unit (5) having a housing (6), which unit is placeable on the drive device (1), with a further shaft (9), which is provided with a retainer (10) for a drill (11) and to which the rotational movement of the first shaft (2) and the beating axial movement generated by an impactor device (16) is able to be transmitted, which impactor device (16) is disposed in the unit (5) and the rotational movement of the first shaft (2) is able to be transmitted to the further shaft (9) via a gear transmission (14, 15), and which impactor device (16) is formed by a first disc-shaped wheel (17), which is held in a stationary way in the housing (6), and a second disc-shaped wheel (18), which is fixed to the further shaft (9), and that the faces (19, 20) directed toward each other of the two disc-shaped wheels (17, 18) are each provided with a toothing (21) running substantially in radial direction, the first shaft (2) and the further shaft (9), in the state of the unit (5) being placed on the drive device (1), being aligned substantially at a right angle to one another, **characterised in that** the housing (6) of the unit (5) is made up of two halves (7, 8), which are detachably connected to one another, and **in that** the axial movement of the further shaft (9) away from the first disc-shaped wheel (17) is limited by a stop (22), which stop (22) is formed by a shoulder (23) disposed on the housing (6), on which shoulder the face (24) of the second disc-shaped wheel (18), opposite the face (20) provided with a toothing (21), is able to be supported.

2. Percussion drill according to claim 1, **characterised in that** the unit (5) is connectible to the drive device (1) by means of screw connection (4).

3. Percussion drill according to claim 1 or 2, **characterised in that** the gear transmission is made up of a first bevel gear (15), which is firmly connected to the first shaft (2), and a second bevel gear (14), which is disposed in a torque-proof way on the further shaft (9), which two bevel gears (14, 15) are engaged with one another in a meshing way.

4. Percussion drill according to claim 3, **characterised in that** the second bevel gear (14) is held in a stationary and rotatable way in the housing (6) and that the further shaft (9) is disposed in the second bevel gear (14) in a torque-proof and axially displaceable way.

5. Percussion drill according to claim 3 or 4, **characterised in that** the second bevel gear (14) is provided with an axial bore (26), the surface of which is provided with axially running ribs and grooves (27), and **in that** the surface of the further shaft (9) is provided with corresponding axially running grooves and ribs (28).

6. Percussion drill according to one of the claims 1 to 5, **characterised in that** the further shaft (9) is held in the housing (6) by an upper radial bearing (12) and a lower radial bearing (13).

## Revendications

1. Perceuse à percussion, comprenant un dispositif d'entraînement (1), équipé d'un moteur d'entraînement, avec un premier axe (2) qui peut être entraîné de manière rotative, une unité (5) ayant un boîtier (6), cette unité étant agençable sur un dispositif d'entraînement (1), avec un axe supplémentaire (9), qui est muni d'une prise (10) pour une perceuse (11) et auquel le mouvement rotationnel du premier axe (2) et le mouvement axial de battement généré par un dispositif de frappe (16) peuvent être transmis, lequel dispositif de frappe (16) étant disposé dans l'unité (5) et le mouvement rotationnel du premier axe (2) pouvant être transmis à l'axe supplémentaire (9) par un engrenage (14, 15), et lequel dispositif de frappe (16) étant formé par une première roue en forme de disque (17), qui est tenue d'une manière stationnaire dans le boîtier (6), et une seconde roue en forme de disque (18), qui est fixée à l'axe supplémentaire (9), et que les faces (19, 20) dirigées vers l'une et l'autre des deux roues en forme de disque (17, 18) sont chacune munies d'une denture (21) s'étendant substantiellement dans une direction radiale, le premier axe (2) et l'axe supplémentaire (9), dans l'état de l'unité (5) agencé sur le dispositif d'entraînement (1), étant alignés substantiellement à un angle droit l'un par rapport à l'autre, **caractérisé en ce que** le boîtier (6) de l'unité (5) est composé de deux moitiés (7, 8), qui sont connectées de manière détachable l'une de l'autre, et **en ce que** le mouvement axial de l'axe supplémentaire (9) s'éloignant de la première roue en forme de disque (17) est limité par une butée (22), laquelle butée (22) est formée d'une épaule (23) agencée sur le boîtier (6), sur laquelle épaule la face (24) de la seconde roue en forme de disque (18), opposée à la face (20) munie d'une denture (21), peut être supportée.

2. Perceuse à percussion selon la revendication 1, **caractérisée en ce que** l'unité (5) peut être connectée au dispositif d'entraînement (1) au moyen de raccord à vis (4).

3. Perceuse à percussion selon la revendication 1 ou 2, **caractérisée en ce que** l'engrenage est réalisé par une première roue dentée conique (15), qui est connectée fermement au premier axe (2), et une seconde roue dentée conique (14), qui est disposée d'une manière fixe en rotation sur l'axe supplémentaire (9), lesquels deux roues dentées coniques (14, 15) sont en prise d'engrenage l'une avec l'autre.

4. Perceuse à percussion selon la revendication 3, **caractérisée en ce que** la seconde roue dentée conique (14) est tenue d'une manière stationnaire et rotative dans le boîtier (6) et **en ce que** l'axe supplémentaire (9) est disposé dans la seconde roue dentée conique (14) d'une manière fixe en rotation et déplaçable axialement.

5. Perceuse à percussion selon la revendication 3 ou 4, **caractérisée en ce que** la seconde roue dentée conique (14) est munie d'un trou axial (26), la surface duquel est munie des nervures et rainures (27) s'étendant axialement, et **en ce que** la surface de l'axe supplémentaire (9) est munie des nervures et rainures (28) s'étendant axialement correspondantes.

6. Perceuse à percussion selon l'une quelconque des revendications 1 à 5, **caractérisée en ce que** l'axe supplémentaire (9) est tenu dans le boîtier (6) par un palier radial supérieur (12) et un palier radial inférieur (13).
